# EUROPÄISCHE PATENTSCHRIFT

(11) **EP 1 394 117 B1**
(45) Veröffentlichungstag und Bekanntmachung des Hinweises auf die Patenterteilung: **08.11.2006**
(21) Anmeldenummer: 03450188.2
(22) Anmeldetag: 14.08.2003
(51) Int. Cl.: C02F 1/28, B09C 1/00

(54) **Vorrichtung zum Dekontaminieren von Grundwasserströmen sowie Verfahren zur Herstellung einer derartigen Vorrichtung**
Facility for groundwater purification and process for installing such a facility
Dispositif pour la decontamination des eaux souterraines et procédé pour l'installation d'un tel dispositif

(30) Priorität: 19.08.2002 AT 12412002
(43) Veröffentlichungstag der Anmeldung: 03.03.2004
(73) Patentinhaber: Porr Umwelttechnik GmbH, 1103 Wien (AT)
(72) Erfinder: Martinelli, Walter, Mag., 2380 Perchtoldsdorf (AT); Hammer, Stephan, Mag., 2651 Reichenau a.d. Rax (AT); Holzbauer, Gerald J., Dipl.-Ing., 2542 Kottingbrunn (AT)
(74) Vertreter: Widtmann, Georg

(56) Entgegenhaltungen:
- EP-A- 0 844 031
- WO-A-01/24952
- DE-A- 19 622 159
- DE-U- 29 706 593
- US-B1- 6 224 770

## Beschreibung

Die Erfindung bezieht sich auf eine Vorrichtung zum Dekontaminieren von Grundwasserströmen mit einer ununterbrochenen im Wesentlichen fluiddichten Wand sowie auf ein Verfahren zum Herstellen einer derartigen Vorrichtung.

Der Transport von Schadstoffen erfolgt über zwei wesentliche naturbedingte Transportmittel, u. zw. einerseits über die Luftströme und andererseits über Wasserströme. Dabei ist über zwei unterschiedliche Wege, u. zw. oberirdische Wasserläufe und unterirdische Wasserläufe, zu unterscheiden. Bei den oberirdischen Wasserläufen wird eine Kontamination in der Regel leicht festzustellen sein, wohingegen bei unterirdischen Wasserläufen, also Grundwasserströme, erst bei Verdacht aufwendige Erkundungsarbeiten, beispielsweise mit Probebohrungen, durchgeführt werden. Derartige Kontaminationen von Grundwasser können beispielsweise durch nicht ordnungsgemäße Mülldeponien, alte stillgelegte Industrieanlagen, Unfälle aber auch durch kriegerische Ereignisse hervorgerufen werden.

Zur Reinigung von Grundwasserströmen sind verschiedene Verfahren bekannt, wobei sogenannte Filterreaktionswände aber auch Filter mit Leitwänden von besonderer Bedeutung sind.

Aus der DE 44 25 061 C1 wird ein Verfahren zur Herstellung eines permeablen Behandlungsbettes zur Reinigung von kontaminierten Grundwasserströmen bekannt, wobei ein Graben quer zur Grundwasserströmung errichtet wird, der sich bis unter die Grundwassersohle erstreckt. Um ein Kollabieren des Grabens zu verhindern, erfolgt eine Abstützung mit Platten, die mit Querstreben abgestützt sind. In dem so erhaltenen Hohlraum werden Dekontaminationsmittel angeordnet. Durch die Platten kann das verunreinigte Wasser hindurchtreten und wird durch das Dekontaminationsmittel gereinigt. Es ist die gesamte Wand als Filterwand ausgebildet.

Aus der DE 44 31 331 A1 wird eine weitere Filterwand bekannt, wobei geschlitzte Spundwände gesetzt werden, der Raum dazwischen von Erdreich befreit, und sodann werden Kassetten mit durchlässigen Wänden, die das Dekontaminationsmaterial enthalten, in dem so geschaffenen Hohlraum eingelagert.

Aus der US 5 527 457 wird eine Beobachtungssonde, die in der Nähe von Tankstellen od. dgl. angeordnet ist, bekannt, die lediglich in das Grundwasser reicht. Zur Entfernung von Kohlenwasserstoffen besteht entweder die Möglichkeit aus dem Rohr Wasser abzuschöpfen oder auch eine Bombe mit Adsorptionsmitteln abzulassen, welche die Kohlenwasserstoffe entweder adsorptiv oder chemisch bindet. Eine Reinigung von Grundwasserströmen kann damit nicht erreicht werden, lediglich eine Reinigung der Beobachtungsbohrung.

Aus der EP 0 841 103 B1 wird eine Filterwand bekannt, die fluiddicht ist und Fenster aufweist, die permeabel für den Grundwasserstrom sind, wobei zusätzlich Dekontaminationsmittel vorgesehen sind, so dass der Grundwasserstrom, so er durch das Fenster hindurchtritt, dekontaminiert wird. Damit kann eine Ersparnis von großen Mengen an Dekontaminationsmitteln erreicht werden, wie sie beispielsweise bei dem Verfahren gemäß der DE 44 25 061 C1 und DE 44 31 331 A1 gegeben sind.

In der WO 93/22241 wird eine Filterreaktionswand beschrieben, wobei in Spundwänden Rohre mit Schlitzen dichtend eingefügt sind. Die Eindichtung erfolgt über Bentonit od. dgl. Die Rohre als solche werden ebenfalls in den Boden eingerammt. Diese Rohre dienen zur Aufnahme von Dekontaminationsmitteln. Weiters wird empfohlen, anstelle von Rohren im Querschnitt rechteckige Behälter vorzusehen, um einheitliche Verweilzeiten des kontaminierten Grundwasserstromes zu erreichen. Sowohl die Dichtwand als auch die Behälter zur Aufnahme des Dekontaminationsmittels erstrecken sich bis unterhalb des unteren Grundwasserhorizontes der Grundwassersohle. Um Dekontaminationsmittel zu sparen, wird vorgeschlagen, dasselbe mit Inertstoffen, wie Kies u. dgl., zu vermischen. Dadurch muss allerdings die Verweilzeit des kontaminierten Wassers erhöht werden, so dass der Behälter für die Dekontaminationsmittel in Strömungsrichtung des Grundwasserstromes länger als bei unverdünnten Dekontaminationsmittel ausgebildet werden muss. Dadurch ist erneut ein höherer Bedarf an Dekontaminationsmittel bedingt.

Der vorliegenden Erfindung ist zum Ziel gesetzt, eine Filterreaktionswand und ein Verfahren zur Herstellung derselben zu schaffen, wobei ein geringerer Bedarf an Dekontaminationsmittel vorliegt, das einfach ausgewechselt werden kann und sicher verhindern kann, dass Grundwasserströme ohne durch das Dekontaminationsmittel geströmt zu sein, auf die andere Seite der Filterwand gelangen kann. Weiters ist zur Aufgabe gestellt, eine Vorrichtung zu schaffen, die besonders geeignet ist, zum Umschließen von Grundwasserkörpern unterhalb von Altlasten. Weiters sollen besonders tiefe Grundwasserströme erfaßt werden können.

Die vorliegende Erfindung geht von einem Stand der Technik aus, wie er durch die WO 93/22241 geschaffen ist.

Die erfindungsgemäße Vorrichtung gemäss Anspruch 1 besteht im Wesentlichen darin, dass unterhalb eines Bodenbereiches des Hohlkörpers ebenfalls ein fluiddichter Wandteil angeordnet ist, und die zumindest zwei fluiddichten Bereiche über den ebenfalls fluiddichten Bodenbereich und dem unterhalb angeordneten Wandteil verbunden sind. Durch die im Wesentlichen fluiddichte Wand kann beispielsweise ein Grundwasserstrom abgegrenzt werden, wobei dies durch eine Leitwand erreicht werden kann, dass lediglich der kontaminierte Teil eines Grundwasserstromes einer Dekontamination zugeführt wird. Durch die Höhenerstreckung der Wand kann erreicht werden, dass der gesamte Grundwasserstrom höhenmäßig erfaßt wird, so dass ein Austritt von kontaminiertem Grundwasser unterhalb der Wand nicht eintreten kann. Der permeable Körper, in welchem Dekontaminationsmittel angeordnet sind, ermöglicht einen Durchtritt des Grundwassers, wobei gleichzeitig eine Reinigung eintritt. Die Verbindung des Hohlkörpers mit der Wand erfolgt über zwei fluiddichte Bereiche, wobei das Grundwasser durch die permeablen Bereiche des Hohlkörpers ein- und austreten kann. Dadurch, dass unterhalb eines Bodenbereiches des Hohlkörpers ebenfalls die fluiddichte Wand angeordnet ist, die ebenfalls mit dem Hohlkörper fluiddicht verbunden ist, kann der Hohlkörper zur Aufnahme des Dekontaminationsmittels geringer dimensioniert werden, da derselbe nicht bis zum unteren Grundwasserhorizont reichen muss, um einen Durchtritt des kontaminierten Grundwassers sicher zu verhindern. Weiters kann ein derartiger Hohlkörper mit geringerem Aufwand gefertigt werden als bei einer Fertigung desselben bis zum unteren Grundwasserhorizont.

Reicht zumindest ein permeabler Bereich des Hohlkörpers bis über den höchsten oberen Grundwasserhorizont, so kann bei einem größeren Anfall von Grundwasser, wie es beispielsweise nach Regen oder Schneeschmelze eintritt, dasselbe leichter abgeleitet werden.

Reichen zwei permeable Bereiche bis unterhalb des niedrigsten oberen Grundwasserspiegels, so ist Sorge getragen, dass auch bei einem niedrigen Grundwasserstand ein Abfließen von Grundwasser stattfinden kann.

Ist der Bodenbereich des Hohlkörpers mit einer Bodenplatte gebildet, die zwei im Wesentlichen an der Bodenplatte parallel zueinander angeordnete Flügel aufweist, welche sich über die Bodenplatte erstrecken, und zwischen diesen zumindest eine, insbesondere zwei, Öffnung(en) für eine Injektion, insbesondere Injektionsschläuche, aufweist, so kann eine besonders einfache Verbindung des Hohlkörpers mit der darunter befindlichen Wand, insbesondere Schmalwand, erreicht werden, da über die Öffnungen ein Verbindungsmittel, wie Zementsuspension, Bentonit od. dgl., eingepreßt werden kann und die Flügel dafür Sorge tragen, dass das Verbindungsmittel im Bereich zwischen Bodenplatte und Wand verbleibt.

Sind mehrere Hohlkörper über dem Wandteil fluiddicht nebeneinander quer zum Grundwasserstrom angeordnet, so kann dadurch eine höhere Menge von Grundwasser, u. zw. im oberen Bereich, abströmen und gereinigt werden.

Weisen die Hohlkörper auf ihren fluiddichten Bereichen jeweils zwei in Längsrichtung des Hohlkörpers verlaufende Flügel auf, so können die Hohlkörper besonders einfach miteinander fluiddicht, beispielsweise durch Einbringung eines Verbindungsmittels, wie Zementsupension, Bentonit od. dgl., verbunden werden.

Ist im Hohlkörper zumindest eine Zwischenwand angeordnet und/ oder anordenbar, welche quer zum Grundwasserstrom und im Wesentlichen längs des Hohlkörpers verläuft, so kann bei entsprechender Ausbildung der Zwischenwand, beispielsweise, wenn dieselbe perforiert ist, eine Trennung von zwei verschiedenen Dekontaminationsmitteln bewirken, die in Strömungsrichtung gesehen hintereinander angeordnet sind.

Auch besteht die Möglichkeit, beispielsweise die Trennwand dicht auszugestalten und lediglich auf der Unterseite einen Durchtritt zu erlauben, wodurch eine längere Verweilzeit der oberflächennahen Schichten im Hohlkörper gewährleistet ist, so dass bei höherer Kontamination eine größere Reinigung erreicht werden kann.

Ist im Hohlkörper zumindest eine Zwischenwand angeordnet und/oder anordenbar, welche etwa waagrecht verläuft, so können beispielsweise bei Vorliegen einer senkrechten Wand weitere Abteile für verschiedene Kontaminationsmittel geschaffen werden.

Ist vor dem permeablen Bereichen des Hohlkörpers entlang desselben jeweils zumindest ein, insbesondere perforiertes, Rohr angeordnet, so können besonders einfach Proben des kontaminierten bzw. dekontaminierten Grundwassers gezogen werden.

Das erfindungsgemäße Verfahren zum Herstellen einer Vorrichtung zum Dekontaminieren von Grundwasserströmen, wobei eine im Wesentlichen fluiddichte Wand, insbesondere Schmalwand, in Boden gesetzt wird, worauf etwa vertikale Ausnehmungen in Boden mit Verkleidungen für die Ausnehmungen, insbesondere Rohren, gesetzt werden, ein Bodenmaterial während des Setzens oder danach aus der Verkleidung entnommen, ein Hohlkörper zur Aufnahme eines Dekontaminationsmittels in die Ausnehmung abgesenkt wird, worauf gegebenenfalls ein Zwischenraum zwischen Verkleidung und Hohlkörper mit Kies od. dgl. verfüllt und die Verkleidung aus dem Boden gezogen wird, und der Hohlkörper mit der fluiddichten Wand fluiddicht verbunden wird, besteht im Wesentlichen darin, dass unterhalb der späteren Ausnehmung für den Hohlkörper zur Aufnahme des Dekontaminationsmittels ein Wandteil, insbesondere eine Schmalwand, gesetzt wird, und der Hohlkörper mit dem Wandteil fluiddicht, insbesondere durch Injizieren einer Zementsuspension od. dgl., verbunden wird. Mit einem derartigen Verfahren wird auf besonders einfache Art und Weise eine fluiddichte Wand erzeugt, die gleichzeitig ein Fenster, u. zw. den Hohlkörper, aufweist, welcher einen geringeren Bedarf an Dekontaminationsmittel besitzt, wobei eine fluiddichte Verbindung zwischen dem Hohlkörper und dem unter demselben befindlichen Wandteil gewährleistet ist.

Werden mehrere Ausnehmungen im Boden angefertigt, in den Ausnehmungen die Hohlkörper abgesenkt, sodann der Zwischenraum zwischen Verkleidung und Hohlkörper mit Kies od. dgl. verfüllt, worauf die Hohlkörper fluiddicht verbunden werden, so ist ein besonders einfaches Verfahren gegeben, das gleichzeitig eine fluiddichte Wand gewährleistet.

Besonders vorteilhaft wird die Verbindung zwischen den Hohlkörpern dadurch erreicht, dass der Kies od. dgl. zwischen den Hohlkörpern mit einem Bindemittel, insbesondere Zement, verfestigt wird. Der Zement wird besonders lagesicher als Suspension über Injektionsschläuche eingebracht.

Werden zwischen den Hohlkörpern Wandprofile bis zum Wandteil eingerammt, so ist eine besonders stabile und leicht zu fertigende Abdichtung auch über größere Abstände zwischen den Hohlkörpern sichergestellt.

Wird zwischen den Hohlkörpern mit einer Schnecke eine Bohrung durchgeführt und sodann eine Zementsuspension eingebracht, so ist eine weitere Möglichkeit der fluiddichten Verbindung zwischen den Hohlkörpern verwirklicht.

Die erfindungsgemäße Vorrichtung und das erfindungsgemäße Verfahren werden im folgenden anhand der Zeichnungen näher erläutert.

Es zeigen:
- Fig. 1: mehrere Hohlkörper, die in einer Dichtwand nebeneinander angeorgnet sind im horizontalen Schnitt und
- Fig. 2: einen Hohlkörper im vertikalen Schnitt, der oberhalb eines Wandteiles angeordnet ist.

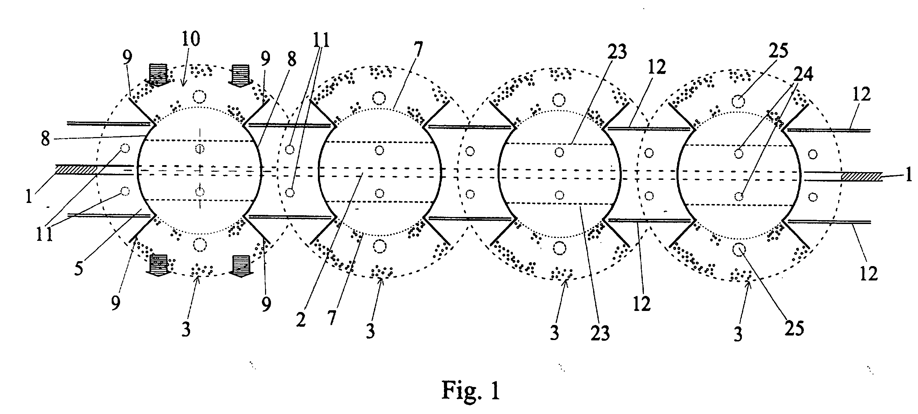

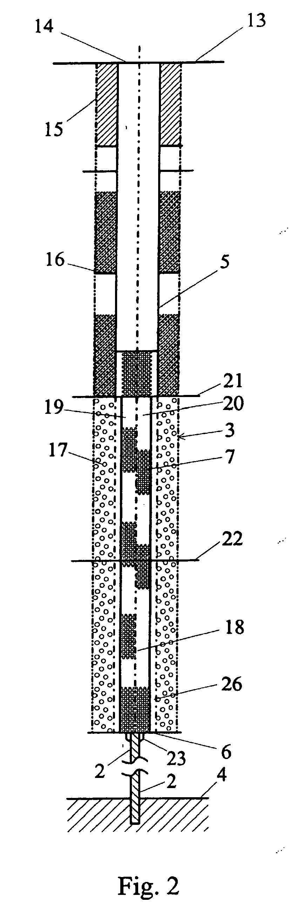

Die Ausführungsform gemäß Fig. 1 und auch Fig. 2 wurde mit dem erfindungsgemäßen Verfahren erstellt. Die Schmalwand 1 wird in den Untergrund gefertigt, wobei der Wandteil 2, der sich unterhalb der späteren Ausnehmung 3 befindet, ebenfalls in den nicht mehr Grundwasser führenden Untergrund 4 eingebaut wird. Je nach der erforderlichen Tiefe und anderen Bedingungen können auch Spundwände oder Schlitzwände bevorzugt werden. Sodann werden die Ausnehmungen 3 mit einem Bohrrohr erbohrt. Das Bohrrohr verbleibt im Boden, und es wird das Bodenmaterial dem Bohrrohr entnommen. Hierauf werden die Hohlkörper 5 mit der Bodenplatte 6, die im Bodenbereich 26 des Hohlkörpers 5 angeordnet ist, abgesenkt. Der Hohlkörper selbst ist rohrförmig und weist zwei permeable Bereiche 7 und zwei fluiddichte Bereiche 8 auf. Der Hohlkörper weist jeweils vier Flügel 9 auf. Der Raum 10 zwischen dem Bohrrohr (nicht dargestellt) und dem Hohlkörper 5 wird mit Kies gefüllt, worauf das Bohrrohr gezogen wird. Über Injektionsschläuche wird eine Zementsuspension über die Öffnungen 11 eingebracht, so dass der Kies zwischen dem Flügel 9 und der Schmalwand 1 bzw. dem weiteren anschließenden Hohlkörper verfestigt wird und eine flüssigkeitsdichte Verbindung aufgebaut wird. Zwischen den Hohlkörpern 5 werden vor der Zementinjektion und auch im Anschluß zur Schmalwand Wandprofile 12 eingerammt. Es kann allerdings auch zwischen den Hohlkörpern mit einer Schnecke eine Bohrung durchgeführt werden und eine Zementsuspension eingebracht werden. Vor den permeablen Bereichen 7, die in Grundwasserströmungsrichtung hintereinander angeordnet sind, befinden sich perforierte Rohre 25 zur Probenentnahme des Grundwassers.

Wie besonders deutlich Fig. 2 zu entnehmen, erstreckt sich der Hohlkörper 5 bis zur Geländeoberkante 13 und ist von einer überfahrbaren Abdeckung 14 nach oben regenwassersicher abgeschlossen. Der Raum 10 zwischen dem Hohlkörper und der Ausnehmung 3 ist im oberen Teil mit einem Betonring 15 erfüllt. Darunter befindet sich eine Abdichtung 16 aus Bentonit, wohingegen der Kies 17 lediglich im permeablen Bereich 7 angeordnet ist. Im Hohlkörper befindet sich weiters eine permeable Zwischenwand 18, durch welche zwei verschiedene Dekontaminationsmittel, u. zw. Eisenspäne 19 und Aktivkohle 20 getrennt zueinander angeordnet sind. Die Zwischenwand kann auch zusätzlich horizontal angeordnet sein, wobei die vertikale Zwischenwand fluiddicht ist, aber vor dem Bodenbereich 26 endigt, so dass das Wasser das Dekontaminationsmittel von oben nach unten und sodann umgekehrt durchströmen muss. Durch die horizontalen permeablen Zwischenwände werden Abteile für unterschiedliche Dekontaminationsmittel gebildet. Die permeablen Bereiche 7 des Hohlkörpers 5 erstrecken sich bis oberhalb eines oberen Grundwasserhorizontes 21 und unterhalb eines unteren oberen Grundwasserhorizontes 22. Die Bodenplatte 6 weist zwei nach unten abragende Flügel 23 auf, die an der Bodenplatte parallel zueinander angeschweißt sind. Die Bodenplatte weist weiters zwei Öffnungen 24 auf, über welche eine Zementsuspension zur Abdichtung des Hohlkörpers 5 gegenüber dem Wandteil 2 eingebracht werden kann. Der Hohlkörper selbst kann aus Kunststoff, beispielsweise Polyvinylchlorid, Stahl aber auch aus Beton od. dgl. bestehen. Anstelle von Zementinjektionen können andere Bindemittel, wie abbindende Kunststoffe, Lehme od. dgl. eingesetzt werden. Wie leicht ersichtlich, ist bei der erfindungsgemäßen Ausbildung weniger Dekontaminationsmittel erforderlich, da nicht der gesamte den Grundwasserstrom führenden Bereich abdeckt sind, sondern nur ein oberer Bereich für das Dekontaminationsmittel erforderlich ist. Damit kann einerseits sichergestellt werden, dass der Grundwasserspiegel beidseits der Filterwand eine gleiche Höhe aufweist und weiters, dass keine Kontaminationen auf die andere Seite der Trennwand gelangen.
Die Füllung des Hohlkörpers mit Dekontaminationsmittel kann nach Absenken desselben in die Ausnehmung, insbesondere nach dichter Verbindung, mit der fluiddichten Wand und des Wandteiles erfolgen.

## Patentansprüche

1. Vorrichtung zum Dekontaminieren von Grundwasserströmen mit mehreren ununterbrochenen im Wesentlichen fluiddichten Wänden, insbesondere Schmalwänden (1), z. B. Umschließungswänden, Leitwänden, welche von unterhalb eines unteren und oberhalb eines oberen Grundwasserhorizontes reichen, zwischen welchen zumindest ein für das Grundwasser permeabler Hohlkörper (5) vorgesehen ist, welcher Hohlkörper, z. B. reaktive, wie Eisenspäne, z. B. adsorptive, wie Aktivkohle, Dekontaminationsmittel aufweist, und wobei der diese, gegebenenfalls teilweise, *umschließende, im* Horizontalschnitt kreisförmige, rohrförmige Hohlkörper (5) zumindest zwei fluiddichte Bereiche (8), welche mit den fluiddichten Wänden (1) fluiddicht angeordnet, z. B. verbunden, sind, und zumindest zwei im Grundwasserströmung hintereinander angeordnete permeable Bereiche (7) zum Durchtritt des Grundwasserstromes, aufweist **dadurch gekennzeichnet, dass** unterhalb eines Bodenbereiches (26) des Hohlkörpers (5) ebenfalls ein fluiddichter Wandteil (2) angeordnet ist, und die zumindest zwei fluiddichten Bereiche (8) über den ebenfalls fluiddichten Bodenbereich (26) und dem unterhalb angeordneten Wandteil (2) verbunden sind.

2. Vorrichtung nach Anspruch 1, **dadurch gekennzeichnet, dass** zumindest ein permeabler Bereich (7) bis über den höchsten oberen Grundwasserhorizont (21) reicht.

3. Vorrichtung nach Anspruch 1 oder 2, **dadurch gekennzeichnet, dass** zwei permeable Bereiche (7) bis unterhalb des niedrigsten oberen Grundwasserhorizontes (22) reichen.

4. Vorrichtung nach Anspruch 1, 2 oder 3, **dadurch gekennzeichnet, dass** der Bodenbereich (26) des Hohlkörpers (5) mit einer Bodenplatte (6) gebildet ist, die zwei im Wesentlichen an der Bodenplatte parallel zueinander angeordnete Flügel (23) aufweist, welche sich über die Bodenplatte (6) erstrecken und zwischen diesen zumindest eine, insbesondere zwei, Öffnungen (24) für eine Injektion, insbesondere für Injektionsschläuche, aufweist.

5. Vorrichtung nach einem der Ansprüche 1 bis 4, **dadurch gekennzeichnet, dass** mehrere Hohlkörper (5) über dem Wandteil (2) fluiddicht nebeneinander quer zum Grundwasserstrom angeordnet sind.

6. Vorrichtung nach einem der Ansprüche 1 bis 5, **dadurch gekennzeichnet, dass** die Hohlkörper (5) auf ihren fluiddichten Bereichen (8) jeweils zwei in Längsrichtung des Hohlkörpers verlaufende Flügel (9) aufweisen.

7. Vorrichtung nach einem der Ansprüche 1 bis 6, **dadurch gekennzeichnet, dass** im Hohlkörper (5) zumindest eine Zwischenwand (18) angeordnet und/oder anordenbar ist, welche quer zum Grundwasserstrom und im Wesentlichen längs des Hohlkörpers (5) verläuft.

8. Vorrichtung nach einem der Ansprüche 1 bis 7, **dadurch gekennzeichnet, dass** im Hohlkörper (5) zumindest eine Zwischenwand angeordnet und/oder anordenbar ist, welche etwa waagrecht verläuft.

9. Vorrichtung nach einem der Ansprüche 1 bis 8, **dadurch gekennzeichnet, dass** vor den permeablen Bereichen (7) des Hohlkörpers (5) entlang desselben jeweils zumindest ein, insbesondere perforiertes, Rohr (25) angeordnet ist.

10. Verfahren zum Herstellen einer Vorrichtung zum Dekontaminieren von Grundwasserströmen, insbesondere nach einem der Ansprüche 1 bis 9, wobei im Wesentlichen fluiddichte Wände (1), insbesondere Schmalwände, in Boden gesetzt werden, worauf etwa vertikale Ausnehmungen im Boden zwischen den fluiddichten Wänden mit Verkleidungen für die Ausnehmungen, insbesondere Rohren, gesetzt werden, ein Bodenmaterial während des Setzens oder danach aus der Verkleidung entnommen, ein für das Grundwasser permeabler Hohlkörper (5) zur Aufnahme eines Dekontaminationsmittels in die Ausnehmung abgesenkt wird, worauf gegebenenfalls ein Zwischenraum zwischen Verkleidung und Hohlkörper (5) mit Kies od. dgl. verfüllt und die Verkleidung aus dem Boden gezogen wird, und der Hohlkörper (5) mit den fluiddichten Wänden (1) fluiddicht verbunden wird, **dadurch gekennzeichnet, dass** unterhalb der zu setzenden Ausnehmung für den Hohlkörper (5) zur Aufnahme des Dekontaminationsmittels ein fluiddichter Wandteil (2), insbesondere Schmalwandteil, gesetzt wird, und der Hohlkörper (5) mit dem Wandteil (2) fluiddicht, insbesondere durch Injizieren einer Zementsuspension od. dgl., verbunden wird.

11. Verfahren nach Anspruch 10, **dadurch gekennzeichnet, dass** mehrere Ausnehmungen im Boden angefertigt, in den Ausnehmungen die Hohlkörper (5) abgesenkt werden, sodann der Zwischenraum zwischen Verkleidung und Hohlkörper mit Kies od. dgl. verfüllt wird, worauf die Hohlkörper (5) fluiddicht mit den fluiddichten Wänden (1) und Wandteilen (2) verbunden werde n.

12. Verfahren nach Anspruch 11, **dadurch gekennzeichnet, dass** der Kies od. dg1. zwischen den Hohlkörpern (5) mit einem Bindemittel, insbesondere Zement, verfestigt wird.

13. Verfahren nach Anspruch 12, **dadurch gekennzeichnet, dass** der Zement als Suspension über Injektionsschläuche eingebracht wird.

14. Verfahren nach einem der Ansprüche 10 bis 1 3, **dadurch gekennzeichnet, dass** zwischen den Hohlkörpern (5) Wandprofile (12) bis zum Wandteil (2) eingerammt werden.

15. Verfahren nach einem der Ansprüche 10 bis 14, **dadurch gekennzeichnet, dass** zwischen den Hohlkörpern (5) mit einer Schnecke eine Bohrung erfolgt und zwischen den Hohlkörpern (5) eine Zementsuspension eingebracht wird.

## Claims

1. Device for decontaminating groundwater flows with a plurality of uninterrupted substantially fluid-tight walls, in particular narrow walls (1), for example surroundings walls, guiding walls, which reach from below a lower groundwater plane and above an upper groundwater plane, between which at least one hollow body (5), which is permeable to the groundwater, is provided, which hollow body has, for example, reactive decontamination means, such as iron filings, or for example adsorptive decontamination means such as activated carbon, and wherein the tubular hollow body (5), which is circular in horizontal cross section and optionally partially surrounds these decontamination means, has at least two fluid-tight regions (8), which are arranged, in a fluid-tight manner, for example connected to the fluid-tight walls (1), and at least two permeable regions (7) arranged one behind the other in the groundwater flow for the passage of the groundwater flow, **characterised in that** a fluid-tight wall part (2) is also arranged below a base region (26) of the hollow body (5), and the at least two fluid-tight regions (8) are connected via the also fluid-tight base region (26) and the wall part (2) arranged below.

2. Device according to claim 1, **characterised in that** at least one permeable region (7) reaches to above the highest upper groundwater plane (21).

3. Device according to claim 1 or 2, **characterised in that** two permeable regions (7) reach to below the lowest upper groundwater plane (22).

4. Device according to claim 1, 2 or 3, **characterised in that** the base region (26) of the hollow body (5) is formed with a base plate (6), which has two vanes (23) arranged substantially on the base plate parallel to one another, which extend over the base plate (6) and, between them, have at least one, in particular two, openings (24) for an injection, in particular for injection hoses.

5. Device according to any one of claims 1 to 4, **characterised in that** a plurality of hollow bodies (5) are arranged over the wall part (2), in a fluid-tight manner, next to one another transversely to the groundwater flow.

6. Device according to any one of claims 1 to 5, **characterised in that** the hollow bodies (5) in each case have two vanes (9) running in the longitudinal direction of the hollow body on their fluid-tight regions (8).

7. Device according to any one of claims 1 to 6, **characterised in that** at least one partition wall (18) is arranged and/or can be arranged in the hollow body (5), and extends transversely to the groundwater flow and substantially along the hollow body (5).

8. Device according to any one of claims 1 to 7, **characterised in that** at least one partition wall is arranged and/or can be arranged in the hollow body (5) and extends approximately horizontally.

9. Device according to any one of claims 1 to 8, **characterised in that** at least one, in particular perforated, pipe (25) is arranged, in each case, in front of the permeable regions (7) of the hollow body (5) and along it.

10. Method for producing a device for decontaminating groundwater flows, in particular according to any one of claims 1 to 9, wherein substantially fluid-tight walls (1), in particular narrow walls, are placed in the ground, whereupon approximately vertical openings are placed in the ground, between the fluid-tight walls with claddings for the openings, in particular pipes, a ground material being removed during the placing or thereafter, from the cladding, a hollow body (5) which is permeable to the groundwater being lowered into the opening to receive a decontamination means,
whereupon optionally a gap between the cladding and the hollow body (5) is filled with gravel or the like and the cladding is pulled out of the ground, and the hollow body (5) is connected in a fluid-tight manner to the fluid-tight walls (1), **characterised in that** a fluid-tight wall part (2), in particular narrow wall part, is placed below the opening to be placed for the hollow body (5), to receive the decontamination means, and the hollow body (5) is connected in a fluid-tight manner, in particular by injecting a cement suspension or the like, to the wall part (2).

11. Method according to claim 10, **characterised in that** a plurality of openings are produced in the ground, the hollow bodies (5) are then lowered into the openings, and then the gap between the cladding and hollow bodies is filled with gravel or the like, whereupon the hollow bodies (5) are connected in a fluid-tight manner to the fluid-tight walls (1) and wall parts (2).

12. Method according to claim 11, **characterised in that** the gravel or the like between the hollow bodies (5) is solidified with a binder, in particular cement.

13. Method according to claim 12, **characterised in that** the cement is introduced via injection hoses as a suspension.

14. Method according to any one of claims 10 to 13, **characterised in that** wall profiles (12) are driven in up to the wall part (2) between the hollow bodies (5)

15. Method according to any one of claims 10 to 14, **characterised in that** a drilling is carried out between the hollow bodies (5) with a worm and a cement suspension is introduced between the hollow bodies (5).

## Revendications

1. Dispositif pour la décontamination de courants des eaux souterraines, comprenant plusieurs parois, notamment parois étroites (1), ininterrompues et essentiellement étanches aux fluides, par exemple des parois de confinement, des parois de guidage, lesquelles vont d'au-dessous d'un horizon inférieur à au-dessus d'un horizon supérieur des eaux souterraines, entre lesquelles est prévu au moins un corps creux (5) perméable aux eaux souterraines, lequel corps creux comporte des moyens de décontamination, par exemple réactifs tels que des copeaux de fer, par exemple adsorptifs tels que du charbon actif, et lequel corps creux (5), assurant le cas échéant partiellement le confinement de ceux-ci, de forme tubulaire et de section horizontale circulaire, comporte au moins deux parties (8) étanches aux fluides lesquelles sont disposées, par exemple reliées de manière étanche aux fluides aux parois (1) étanches aux fluides, et au moins deux parties perméables (7) disposées l'une après l'autre dans le courant des eaux souterraines pour le passage du courant des eaux souterraines, **caractérisé en ce qu'**un élément de paroi (2) étanche aux fluides est agencé aussi au-dessous d'une partie de fond (26) du corps creux (5) et **en ce que** lesdites au moins deux parties (8) étanches aux fluides sont reliées entre elles par l'intermédiaire de la partie de fond (26) également étanche aux fluides et de l'élément de paroi (2) disposé au-dessous.

2. Dispositif selon la revendication 1, **caractérisé en ce qu'**au moins une partie perméable (7) va jusqu'au-dessus du plus haut horizon supérieur (21) des eaux souterraines.

3. Dispositif selon la revendication 1 ou 2, **caractérisé en ce que** deux parties perméables (7) vont jusqu'au-dessous du plus bas horizon supérieur (22) des eaux souterraines.

4. Dispositif selon la revendication 1, 2 ou 3, **caractérisé en ce que** la partie de fond (26) du corps creux (5) est formée par une plaque de fond (6) qui présente deux ailes (23) disposées essentiellement parallèlement l'une à l'autre sur la plaque de fond et s'étendant sur la plaque de fond et, entre celles-ci, au moins une, en particulier deux ouvertures (24) pour une injection, en particulier pour des flexibles d'injection.

5. Dispositif selon l'une des revendications 1 à 4, **caractérisé en ce que** plusieurs corps creux (5) au-dessus de l'élément de paroi (2) sont disposés de manière étanche aux fluides, l'un à côté de l'autre, transversal au courant des eaux souterraines.

6. Dispositif selon l'une des revendications 1 à 5, **caractérisé en ce que** les corps creux (5) présentent sur leurs parties (8) étanches aux fluides chacun deux ailes (9) qui s'étendent dans le sens longitudinal du corps creux.

7. Dispositif selon l'une des revendications 1 à 6, **caractérisé en ce qu'**au moins une paroi intermédiaire (18) est et/ou peut être placée dans le corps creux (5), laquelle paroi s'étend transversal au courant des eaux souterraines et essentiellement le long du corps creux (5).

8. Dispositif selon l'une des revendications 1 à 7, **caractérisé en ce qu'**au moins une paroi intermédiaire est et/ou peut être placée dans le corps creux (5), laquelle paroi s'étend sensiblement horizontalement.

9. Dispositif selon l'une des revendications 1 à 8, **caractérisé en ce qu'**au moins un tube (25), notamment perforé, est disposé devant chacune des parties perméables (7) du corps creux (5), le long de celui-ci.

10. Procédé de fabrication d'un dispositif pour la décontamination de courants des eaux souterraines, notamment selon l'une des revendications 1 à 9, dans lequel on installe dans le sol des parois (1) essentiellement étanches aux fluides, en particulier des parois étroites, puis on installe dans le sol des évidements sensiblement verticaux entre les parois étanches avec des chemisages pour les évidements, notamment des tubes, on prélève dans le chemisage, pendant l'installation ou après, un matériau du sol, on descend dans l'évidement un corps creux (5) perméable aux eaux souterraines, destiné à recevoir un moyen de décontamination, puis on remplit le cas échéant un espace entre chemisage et corps creux (5) avec du gravillon ou similaire et on sort le chemisage du sol et on assemble de manière étanche aux fluides le corps creux (5) avec les parois (1) étanches aux fluides, **caractérisé en ce qu'**on installe, au-dessous de l'évidement à installer pour le corps creux (5) destiné à recevoir le moyen de décontamination, un élément de paroi (2) étanche aux fluides, notamment un élément de paroi étroit, et **en ce qu'**on assemble de manière étanche aux fluides le corps creux (5) avec l'élément de paroi (2), notamment en injectant une suspension de ciment ou similaire.

11. Procédé selon la revendication 10, **caractérisé en ce qu'**on réalise plusieurs évidements dans le sol, on descend dans lesdits évidements les corps creux (5), on remplit ensuite l'espace entre chemisage et corps creux avec du gravillon ou similaire, puis on assemble de manière étanche aux fluides les corps creux (5) avec les parois (1) et éléments de paroi (2) étanches aux fluides.

12. Procédé selon la revendication 11, **caractérisé en ce qu'**on consolide le gravillon ou similaire entre les corps creux (5) avec un liant, notamment du ciment.

13. Procédé selon la revendication 12, **caractérisé en ce qu'**on incorpore le ciment comme suspension à l'aide de flexibles d'injection.

14. Procédé selon l'une des revendications 10 à 13, **caractérisé en ce qu'**on enfonce entre les corps creux (5) des profilés de paroi (12) jusqu'à l'élément de paroi (2).

15. Procédé selon l'une des revendications 10 à 14, **caractérisé en ce qu'**on réalise entre les corps creux (5), à l'aide d'une vis sans fin, un perçage et on incorpore entre les corps creux (5) une suspension de ciment.
